# EUROPÄISCHE PATENTANMELDUNG

(11) **EP 1 439 682 A2**
(43) Veröffentlichungstag der Anmeldung: **21.07.2004**
(21) Anmeldenummer: 04009553.1
(22) Anmeldetag: 29.08.2001
(51) Int. Cl.: H04L 29/06, H04Q 7/32

(54) **System und Verfahren zum zurechenbaren drahtlosen Zugreifen auf computerbasierte Serviceleistungen**

(30) Priorität: 01.09.2000 US 230156 P
(62) Teilanmeldung aus: 01969662.4
(71) Anmelder: SAP AG, 69190 Walldorf (DE)
(72) Erfinder: Mühlhäuser, Max, 64372 Ober-Ramstadt (DE)
(74) Vertreter: Müller-Boré & Partner Patentanwälte

(57) **Zusammenfassung**

Die vorliegende Erfindung betrifft ein Verfahren zum Zugreifen auf computerbasierte Serviceleistungen (1 ), mit folgenden Schritten:
Erfassen eines sich vorübergehend im Bereich eines Servicecomputers (4; 26) befindlichen tragbaren elektronischem Gerät (11) eines Serviceusers (2) über eine drahtlose Verbindung (10);
Verifizieren der Identität des Serviceusers (2) des tragbaren elektronischen Geräts (11) über die drahtlose Verbindung (10);
Übermitteln von Information über die Serviceleistung (1) an den Serviceuser (2);
Empfangen einer Serviceeingabe (5) durch den Serviceuser (2) über die drahtlose Verbindung (10); und
Durchführen zumindest einer Servicenutzung (24).

## Beschreibung

Die Erfindung bezieht sich auf ein Verfahren zum drahtlosen, zurechenbaren Zugreifen auf computerbasierte Serviceleistungen mittels eines mobilen Handgerätes durch einen Serviceuser.

Die Erfindung richtet sich allgemein auf Anwendungen von Computern und Computernetzwerken und spezifischer auf Techniken, um Usern einen drahtlosen, zurechenbaren Zugriff auf mittels Computer angebotene oder veranlasste Funktionen, sogenannte Serviceleistungen, zu ermöglichen. Die Erfindung steht auch in engem Zusammenhang mit mobilem elektronischem Handel.

Die Ausdrücke "mobile Commerce" und "mobiler elektronischer Handel" werden gebräuchlicherweise verwendet, um jede Art von elektronischem Handel zu bezeichnen, der nicht vom Schreibtisch eines Users aus, d.h. von Zuhause oder seinem Arbeitsplatz, ausgelöst oder durchgeführt wird. Beim mobilen elektronischen Handel geht man davon aus, dass der Käufer unterwegs ist, wobei die Software des Verkäufers auf einem nahezu beliebigen Computer oder Computernetzwerk laufen kann.

Der mobile elektronische Handel ist ein bedeutendes und wichtiges Anwendungsgebiet der vorliegenden Erfindung. Sie richtet sich jedoch auch auf andere Anwendungen, so dass allgemein der Begriff "Serviceuser" statt "Käufer" und "Serviceleistung" statt "Angebot des Anbieters" verwendet wird. Eine Serviceleistung im Sinne der Erfindung ist allgemein etwas, was mittels einer Computersoftware und/oder Firmware angeboten wird und zwischen User und Serviceanbieter eine Beziehung herstellt, die im juristischen Sinne einen Vertrag darstellt, d.h. aus Angebot und Annahme besteht. Die genannte Software und/oder Firmware wird im erfindungsgemäßen Zusammenhang als Servicesoftware bezeichnet. Mit "User" ist hier der User der Servicesoftware gemeint, nachfolgend Serviceuser genannt, mit Serviceanbieter die Person oder Partei, die die Serviceleistung bereitstellt, welche in der Servicesoftware repräsentiert wird beziehungsweise von der Servicesoftware veranlasst wird.

Im erfindungsgemäßen Zusammenhang wird genauer unter einem Serviceuser eine Person verstanden, die unterwegs ist und potentiell dafür in Frage kommt, die angebotene Serviceleistung zu akzeptieren. Diese Person befindet sich vorübergehend in der Nähe eines Computers, auf dem die Servicesoftware läuft bzw. angeboten wird. Der Serviceuser führt ein mobiles Handgerät wie beispielsweise ein Mobiltelefon oder einen Taschencomputer mit sich, das permanent in seinem Besitz ist oder vorübergehend eindeutig personalisiert ist, das also die Identität des Serviceusers zweifelsfrei wiederspiegelt.

Die Serviceleistung kann die Lieferung von physikalischen oder elektronischen Waren oder Dienstleistungen umfassen, aber auch jede andere Beziehung zwischen Serviceuser und Serviceanbieter repräsentieren, für welche Zurechenbarkeit erwünscht ist, beispielsweise das Durchschreiten einer Sicherheitsschleuse.

Entsprechend wird unter Servicesoftware im erfindungsgemäßen Zusammenhang eine beliebige Software verstanden, bei deren Bedienung durch wechselnde Benutzer Zurechenbarkeit erwünscht oder erforderlich ist, beispielsweise aufgrund rechtsverbindlicher Wirkungen wie bei mobilem elektronischem Handel und elektronischen Auktionen, im Umgang mit Behörden und Informations- und Dienstleistungsanbietern, im Umgang mit schutzwürdigen Informationen oder Orten von Unternehmen oder im Umgang mit personenbezogenen Daten wie bei der Personalzeiterfassung. Die Zurechenbarkeit kann dabei unterschiedliche Details umfassen, beim elektronischen Handel beispielsweise die Details einer bestellten Serviceleistung, beim Durchschreiten einer Sicherheitsschleuse beispielsweise Ort und Zeitpunkt, meist auch die Identität des Serviceusers und des Anbieters der Serviceleistung sowie gegebenenfalls weiterer Beteiligter, gegebenenfalls aber auch nur das Zustandekommen einer Beziehung zwischen Serviceuser und Serviceanbieter überhaupt. Interesse an der Zurechenbarkeit kann seitens des Serviceanbieters bestehen und seitens des Serviceusers, gegebenenfalls aber auch von einer der beiden Seiten.

Das Internet und der elektronische Handel verbreiten sich immer weiter, und viele Serviceleistungen, beispielsweise Dienstleistungen und Produkte, werden über Computer angeboten. Oft läuft auf diesen Computern eine Internet-Browser-Software, die ihrerseits auf Server zugreift, auf denen Einzelheiten über die angebotene Serviceleistung gespeichert sind. Von einem potentiellen Serviceuser wird angenommen, dass er das Angebot durchblättert und evtl. Daten eingibt, die Details von Bestellungen spezifizieren. Dies erfolgt üblicherweise durch Ausfüllen eines elektronischen Formulars. Das Ausfüllen des Formulars besteht oft aus dem Auswählen von Optionen des Angebots und Eingeben persönlicher Daten wie Identität, Adresse und Bankverbindung. Dementsprechend zielt eine besondere Ausführungsform der Erfindung auf die Verwendung einer Internet-Browser-Software auf dem Servicecomputer.

Ein mit Hilfe von Internet-Browser-Software realisierbares Ablaufschema findet sich auch bei anderen Serviceleistungen als dem unmittelbaren Kauf einer Dienstleistung oder eines Produktes. Beispiele hierfür sind das Anbieten nicht kommerzieller Serviceleistungen, beispielsweise durch eine Behörde, oder Serviceleistungen, die der Werbung oder der Vorbereitung eines Verkaufs zuzurechnen sind, beispielsweise beim Bestellen eines kostenlosen Katalogs. Ein weiteres Beispiel ist der Abschluss eines nicht kommerziellen rechtlichen Vertrages zwischen der Partei, die durch den Servicecomputer repräsentiert wird, und dem Serviceuser, beispielsweise eine Geheimhaltungsvereinbarung als Beispiel für geschäftliche und betriebliche Vorgänge, die zurechenbar sein sollen. Für andere derartige Vorgänge bietet sich zur Realisierung erfindungsgemäßer Verfahren und Systeme eher nicht die Verwendung von Internet-Browser-Software an, beispielsweise für das Durchschreiten von Sicherheitsschleusen wie beschrieben oder für die Personal-Zeiterfassung. Welche erfindungsgemäßen Verfahren und Systeme mit der auf Internet-Browser-Software abgestimmten besonderen Ausführungsform realisiert werden und welche nicht, muss im Einzelfall beispielsweise anhand der jeweils vorherrschenden Unternehmenspraxis entschieden werden.

Ein anderes Anwendungsbeispiel bezieht sich auf elektronische Versteigerungen, wobei die Rollen von Anbieter und Käufer im kaufmännischen Sinne unterschiedlich verteilt sein können. Das Angebot der Partei, die die Software bereitstellt, kann sich darauf beschränken, das virtuelle Auktionshaus d.h. die Mittel bereitzustellen, damit Dinge zur Versteigerung angeboten werden können und Gebote abgegeben werden können; die Rolle des Serviceusers kann darin bestehen, den Bedingungen der Auktion zuzustimmen und Gebote abzugeben, gegebenenfalls auch etwas zur Versteigerung anzubieten.

Darüber hinaus gibt es auch Anwendungsfälle, in denen Serviceleistungen anbietende Computer sogenannte "eingebettete Systeme" sind, also in eine umgebende Maschinerie integriert sind; Beispiele hierfür sind Kopierer und Verkaufsautomaten, von denen Serviceuser Gebrauch machen.

In vielen Fällen ist es aus Sicht des Serviceusers und/oder aus Sicht des Anbieters der Serviceleistung nicht wünschenswert oder nicht durchführbar, dass ein sich unterwegs befindender Serviceuser unmittelbar auf den die Serviceleistung anbietenden Computer und seine Peripherie manuell zugreift. Beispiele hierfür sind Computermonitore, die hinter Fensterscheiben bzw. Schaufenstern, beispielsweise von geschlossenen Geschäften installiert sind und auch außerhalb der Öffnungszeit eine Serviceleistung, z.B. das Buchen einer Reise, anbieten, Computersysteme, die zu sicherheitskritischen Netzwerken gehören, Computer an öffentlichen Plätzen, denen Serviceuser nicht ohne weiteres sicherheitskritische Daten anvertrauen und Geräte, an denen kurze Transaktionen durchgeführt werden und Benutzer nicht viel Zeit mit der Eingabe persönlicher Daten verbringen wollen, beispielsweise Verkaufsautomaten.

Zurechenbarkeit bezeichnet im erfindungsgemäßen Zusammenhang die Möglichkeit, dass im wünschenswerten Umfang Einzelheiten der erfindungsgemäßen Nutzung einer Servicesoftware für den Serviceuser und/oder für den Anbieter der Serviceleistung nachweisbar belegt werden. Dazu bedient sich das erfindungsgemäße Verfahren der aus dem Stand der Technik bekannten Verfahren der digitalen Signatur und der Nutzung von digitalen Zertifikaten.

Das Schutzziel Zurechenbarkeit ist allgemein bekannt aus der computergestützten Kommunikation mit vertragsbildendem Charakter oder mit rechtsverbindlichen Bestandteilen, beispielsweise beim elektronischen Handel, wo sichergestellt werden muss, dass ausgehandelte Vertragsinhalte d.h. gesendete Daten und ausgelöste Funktionen den Vertragspartnern zugerechnet werden können und die Identitäten der Vertragspartner und ggf. anderer am Vorgang Beteiligter dabei zweifelsfrei sind. Zugerechnet werden sollen im Normalfall konkrete gesandte Daten, ggf. auch nur das Vorkommen einer Kommunikation bzw. deren Umstände wie der Zeitpunkt. Bei konventionellen Vertragsabschlüssen geschieht dies, indem Vertragsinhalte fälschungssicher unterzeichnet und die Unterschriften "gesichert" werden (hinterlegt oder durch vorgelegte oder hinterlegte Dokumente wie Ausweise geprüft). Im Rahmen der Computerkommunikation wird Zurechenbarkeit nach dem Stand der Technik mittels sogenannter digitale Signaturen sichergestellt. Deren Grundlage sind unsymmetrische oder "public-key" Verschlüsselungsverfahren, bei denen zum Ver- und zum Entschlüsseln verschiedene Schlüssel notwendig sind, von denen einer geheim gehalten und einer öffentlich allgemein bekannt gemacht wird.

Digitale Signaturen sind verschlüsselte Prüfsummen der zu signierenden Daten derart, dass
1. von Empfängern und Dritten aus den Daten die Prüfsumme eindeutig reproduziert werden kann,
2. aus der Prüfsumme weder die Originaldaten noch andere sinnvolle Daten mit selber Prüfsumme mit lohnenswertem Aufwand konstruiert werden können,
3. die Verschlüsselung der Prüfsumme nur vom ursprünglichen Sender mit dessen Geheimschlüssel mit lohnenswertem Aufwand vorgenommen werden kann und
4. die Entschlüsselung der Prüfsumme vom Empfänger und Dritten unter Kenntnis eines zum Geheimschlüssel gehörigen öffentlichen Schlüssels vorgenommen werden kann.

Die Prüfung einer digitalen Signatur erfolgt durch deren Entschlüsselung mittels öffentlichem Schlüssel und Vergleich mit der reproduzierten Prüfsumme. Zuverlässige digitale Signaturen lassen folgende Angriffe nicht mit lohnendem Aufwand zu: Fälschung einer Signatur, Fälschung signierter Daten und Leugnen der Urheberschaft einer Information. Als Voraussetzung für den letztgenannten Punkt muss verhindert werden, dass die Urheberschaft eines verwendeten öffentlichen Schlüssels geleugnet werden kann. Als (digitale) Zertifikate bezeichnet man in diesem Zusammenhang Daten über die Identität einer an computergestützter Kommunikation beteiligten Seite, üblicherweise einschließlich eines zur Prüfung digitaler Signaturen zu verwendenden öffentlichen Schlüssels, üblicherweise digital signiert von einer vertrauenswürdigen Instanz, welche für die Richtigkeit des Zertifikatsinhaltes bürgt. Der Zertifikatsstandard X.509 und die digitalen Signaturverfahren SHA und MD5, welche in erfindungsgemäßen Verfahren zum Einsatz kommen, spiegeln den Stand der Technik wieder.

Mobile Handgeräte, Systeme zur drahtlosen Kommunikation und Verfahren für digitale Signaturen als Bestandteile der vorliegenden Erfindung sind weit verbreitet. Dennoch gibt es für die vielfältigen, oben genannten Anwendungsfälle des mobilen elektronischen Handels und allgemein des zurechenbaren mobilen Zugreifens auf Computer bisher keine zufriedenstellende Lösung, die den Anforderungen gerecht wird.

Aus dem Dokument DE 19903822 A1 ist ein Verfahren zur Durchführung bargeldloser Zahlungen bekannt, das in der Praxis unter der Bezeichnung "Paybox" betrieben wird. Dabei wird eine Bezahlung mittels eines Mobiltelefons durchgeführt. Dem Verfahren liegt folgendes Schema zugrunde. Der Serviceuser muss sich bei einem "Paybox-Service" registrieren und den Paybox-Service autorisieren, Geldtransfer von seinem Bankkonto durchzuführen. Zwischen dem Serviceuser und dem Paybox-Service wird in sicherer Weise eine Autorisierungs-PIN eingerichtet, die der Mobilfunknummer des Serviceusers zugeordnet ist. Beim Abschluss eines Vertrages mit einem Verkäufer bzw. Anbieter wird der Serviceuser durch die Servicesoftware aufgefordert, an dem Servicecomputer des Verkäufers seine Mobil-funknummer einzugeben. Die Servicesoftware richtet dann eine sichere Verbindung zu dem Paybox-Service ein und überträgt den zu bezahlenden Betrag, die Kontodaten des Anbieters der Serviceleistung und die von dem Serviceuser abgefragte Mobilfunknummer seines Mobiltelefons. Der Paybox-Service ruft dann den Serviceuser an, überträgt Daten über den zu bezahlenden Betrag und den Anbieter der Serviceleistung und fordert den Serviceuser auf, den Geldtransfer von seinem Konto auf das Konto des Anbieters durch Eingabe seiner PIN zu bestätigen.

Dieses bekannte Verfahren weist verschiedene Nachteile auf. Es ist nur zur Abwicklung von Zahlungen eines Käufers an einen Anbieter geeignet, die Mobilfunknummer des Käufers muss dem Verkäufer bekannt gegeben werden, eine dritte Partei, der Paybox-Service, muss in die Transaktion eingeschaltet werden und die Transaktion erfordert den zeit- und kostenaufwendigen Aufbau einer Mobilfunkverbindung zwischen dem Käufer und dem Paybox-Service. Insbesondere kann der Käufer nicht selbst mittels seines Mobiltelefons in dem Angebot blättern.

Aus dem Dokument WO 97/05729 ist ein mobiles Funkterminal bekannt, das über einen zusätzlichen Chipkartenleser verfügt, mit dem vorausbezahlte Chipkarten zur Entrichtung der Gebühren für die Nutzung des Mobilfunkservices verwendet werden können. Diese Vorrichtung ist nur für den Gebühreneinzug durch den Mobilfunknetzbetreiber geeignet und weist keine allgemeine Funktionalität zur Durchführung von mobilem elektronischem Handel auf.

Das Dokument DE 19747603 A1 offenbart ein Verfahren zum digitalen Signieren einer Nachricht mittels eines mobilen Handgeräts, vorzugsweise eines Mobiltelefons. Das mobile Handgeräts übernimmt dabei die Funktion eines Signiergeräts, das nicht, wie z.B. bei Geldautomaten üblich, über eine lokale Drahtverbindung, sondern drahtlos über ein Telefonnetz, z.B. ein Mobilfunktelefonnetz angeschlossen ist, um beispielsweise einen Internet-Banking-Vorgang zu signieren. Eine räumliche Nähe zwischen dem mobilen Handgerät und der Nachrichtenquelle bzw. dem Empfänger der signierten Nachricht muss nicht bestehen. Das bekannte Verfahren ist jedoch nur zum Signieren geeignet und ermöglicht nicht das interaktive Zugreifen auf eine Serviceleistung mittels des mobilen Handgeräts über eine berührungsfreie, drahtlose Verbindung zu einem Servicecomputer, der in der räumlichen Nähe eines Serviceusers eine Serviceleistung anbietet.

Aus dem Dokument US 6,038,549 ist ein Verfahren für einen verschlüsselten Datentransfer zwischen einem Sender und einem Empfänger, insbesondere einem Pager bekannt, mit dem Nachrichten authentifiziert und bestätigt werden können. Auch dieses Verfahren ermöglicht nicht das interaktive Zugreifen auf eine Serviceleistung mittels eines mobilen Handgeräts über eine berührungsfreie, drahtlose Verbindung zu einem Servicecomputer, der in der räumlichen Nähe eines Serviceusers eine Serviceleistung anbietet.

Der Erfindung liegt unter Berücksichtigung dieses Standes der Technik die Aufgabe zugrunde, ein System und ein Verfahren zum zurechenbaren Zugreifen auf computerbasierte Serviceleistungen zu schaffen, das den geschilderten Anforderungen beispielsweise im Zusammenhang mit mobilem elektronischem Handel genügt. Dabei sollen die Identität der beteiligten Parteien und Daten betreffend die Serviceleistung in einer zurechenbaren Weise übermittelt und von den beteiligten Parteien festgehalten werden können. Den Sicherheitsanforderungen hinsichtlich Integrität und Sicherheit soll, zumindest in bevorzugten Ausgestaltungen und Weiterbildungen, ebenfalls Rechnung getragen werden.

Diese Aufgabe wird erfindungsgemäß durch ein Verfahren mit den Merkmalen des beigefügten Anspruchs 1 und durch ein entsprechendes System mit den Merkmalen des beigefügten Anspruchs 10 gelöst. Bevorzugte Ausgestaltungen und Weiterbildungen der Erfindung ergeben sich aus den Ansprüchen 2 bis 9 sowie 11 und der nachfolgenden Beschreibung mit zugehörigen Zeichnungen.

Bei einem erfindungsgemäßen Verfahren zum drahtlosen, zurechenbaren Zugreifen auf computerbasierte Serviceleistungen mittels eines mobilen Handgerätes durch einen Serviceuser läuft auf einem Servicecomputer eine Servicesoftware zum Bereitstellen einer Serviceleistung durch einen Serviceanbieter für potentielle, sich vorübergehend im Bereich eines Servicecomputers aufhaltende Serviceuser. Ein sich im Bereich eines Servicecomputers aufhaltender Serviceuser kann mittels einer Serviceeingabe auf die Servicesoftware zugreifen. Hierzu verwendet der Serviceuser ein persönliches, mobiles Handgerät, das eine Standardeingabe/-ausgabe sowie vorteilhafterweise eine Mimik zum interaktiven Eingeben von Servicedaten für die Servicesoftware und Programme für einen Servicezugang umfasst. Das mobile Handgerät zum Zugreifen auf eine Serviceleistung tritt über eine drahtlose Verbindung mit einem Servicecomputer in Verbindung. Der Vorgang der Servicenutzung selbst sowie gegebenenfalls beschreibende Daten hierüber werden in zurechenbarer Weise zwischen dem Servicecomputer und dem mobilen Handgerät unter Verwendung digitaler Signaturen ausgetauscht. Zur wechselseitigen Bekanntgabe von Identität und Charakteristika der an der Servicenutzung beteiligten Einheiten tauschen das mobile Handgerät und der Servicecomputer gegebenenfalls digitale Zertifikate über den Serviceuser sowie über die die Serviceleistung realisierende Servicesoftware und damit über die Serviceleistung aus, ferner über das mobile Handgerät und den Servicecomputer.

Ein solches Verfahren ist für Anwendungen des mobilen elektronischen Handels geeignet und darüber hinausgehend für alle Anwendungen des mobilen Rechnens, für die Zurechenbarkeit gewünscht ist. Insbesondere betrifft dies Anwendungen, bei denen die Serviceleistung von einem Unternehmen, einer Behörde, einem Anbieter von Verkaufs- oder Werbeunterlagen, einem Auktionsveranstalter oder einem Gerät, beispielsweise einem Kopiergerät, einem Verkaufsautomaten oder einem Personal-Zeiterfassungsgerät bereitgestellt wird. Als mobile Handgeräte kommen dabei in bevorzugten Ausführungsformen Mobiltelefone, die weit verbreitet sind, Palmtop-Taschencomputer oder vergleichbare Geräte in Frage.

Darüber hinaus weist die Erfindung weitere Vorteile auf. Der Serviceuser kann beim Zugreifen auf eine Serviceleistung und dem damit verbundenen Vertragsschluss bzw. der Übermittlung einer digitalen Signatur zum elektronischen Unterschreiben ein ihm vertrauenswürdiges mobiles Handgerät, z.B. sein eigenes Mobiltelefon verwenden und braucht geheime Daten und Schlüssel etc. nicht fremden Einrichtungen anvertrauen. Auch kann der abgeschlossene, digital gegensignierte Vorgang von ihm in seinem mobilen Handgerät gespeichert zu Nachweiszwecken mit nach Hause genommen werden.

Nach einer weiteren vorteilhaften Ausgestaltung kann vorgesehen sein, dass die Daten über die Identität des Serviceanbieters und des Serviceusers und über die Details der Verbindung 5 sofort oder nachträglich verifiziert werden.

Gegenüber einem konventionellen mobilen elektronischen Handel weist die vorliegende Erfindung unter anderem zwei Besonderheiten auf. Einerseits richtet sie sich auf Anwendungen, die in der Weise beschränkter sind, dass vorausgesetzt wird, dass der Käufer bzw. Serviceuser ein persönliches, elektronisches Gerät, nämlich das mobile Handgerät mit sich führt. Das Handgerät kann er permanent besitzen oder es kann ihm vorübergehend zugeordnet werden, beispielsweise am Eingang eines Geschäftes oder einer Einkaufszone, um darin Einkäufe zu tätigen oder auf andere Serviceleistungen zuzugreifen. Andererseits ist der Anwendungsbereich erweitert, da die Erfindung jede Art von computerunterstützter Kommunikation zwischen einem Serviceuser, d.h. seinem persönlichen mobilen Handgerät, und einem Servicecomputer, auf das der Serviceuser im Vorübergehen zugreift, unterstützt. Dazu gehören beispielsweise Geschäftsbeziehungen und rechnergestützt abgewickelte Vorgänge zwischen Unternehmen und Mitarbeitern oder Dritten, insbesondere Kunden, Lieferanten oder Besuchern, die sich auf dem Firmengelände oder anderweitig in räumlicher Nähe von Computern und von Software aufhalten, welche als erfindungsgemäße Servicesoftware ausgestaltet ist, wenn diese Vorgänge zurechenbar sein sollen. Letzteres ist beispielsweise beim Passieren von Sicherheitsschleusen, im Zusammenhang mit der Arbeitszeiterfassung, beim Abschluss einer Geheimhaltungsvereinbarung oder eines verhandelten Vertrages der Fall.

Die Erfindung wird nachfolgend anhand eines in den Figuren dargestellten Ausführungsbeispiels näher erläutert. Die darin beschriebenen Besonderheiten können einzeln oder in Kombination miteinander eingesetzt werden, um bevorzugte Ausgestaltungen der Erfindung zu schaffen. Es zeigen:
- Fig. 1: ein erfindungsgemäßes System,
- Fig. 2: ein Protokoll zu Fig. 1,
- Fig. 3: ein erfindungsgemäß ausgestattetes Mobiltelefon
- Fig. 4: den zeitlichen Ablauf eines sogenannten Handshake und
- Fig. 5: eine erweiterte Darstellung eines erfindungsgemäßen Systems.

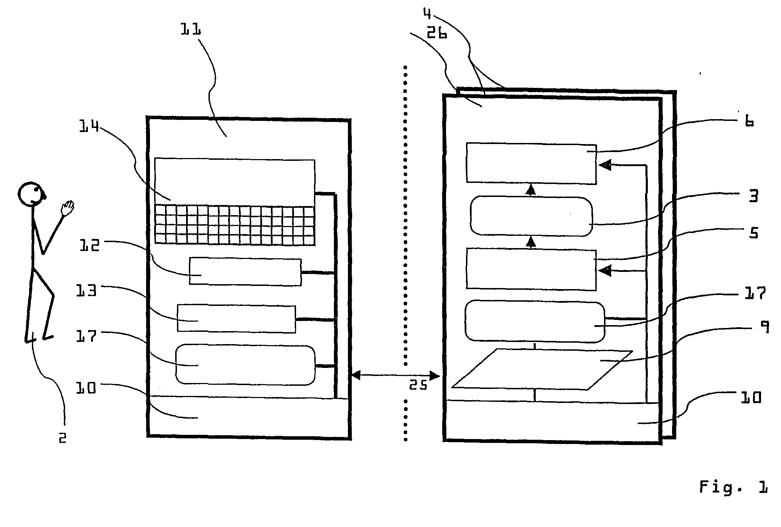

Die Fig. 1 veranschaulicht ein erfindungsgemäßes Verfahren und ein entsprechendes System zum drahtlosen, berührungsfreien, zurechenbaren und fälschungssicheren Zugreifen auf computerbasierte Serviceleistungen 1 mittels eines mobilen Handgerätes 11 durch einen Serviceuser 2, der sich vorübergehend in Sicht- oder Hörweite eines lokalen Servicecomputers 26 aufhält. Die Servicecomputer 4, die auch zu einem Computernetzwerk, insbesondere dem Internet, gehören können, bieten eine Serviceleistung 1 an, und der Serviceuser 2 ist ein potentieller Nutzer der Serviceleistung 1.

In der in Fig. 1 dargestellten Ausführungsform sind zwei Servicecomputer 4 vorhanden, darunter ein spezieller, nämlich lokaler Servicecomputer 26. Unter einem lokalen Servicecomputer 26 wird im erfindungsgemäßen Zusammenhang der Computer verstanden, auf dem ein Teil oder die gesamte Servicesoftware 3 läuft und der sich während der Benutzung durch den Serviceuser 2 in dessen Nähe befindet, ggf. zusammen mit anderen Komponenten eines Intranets oder des Internets, die in das Anbieten der Serviceleistung 1 und die Übermittlung der Serviceleistung 1 involviert sein können. Der lokale Servicecomputer 26 kann dabei als "eingebettetes System" in ein Gerät, beispielsweise einen Verkaufsautomaten oder einen Kopierer integriert sein. Der lokale Servicecomputer 26 ist dabei der zwingend vorhandene Servicecomputer, der außer in der Ausgestaltung nach Anspruch 9 direkt mit dem mobilen Handgerät 11 des Serviceusers 2 in drahtloser Verbindung steht.

Die Servicesoftware 3 umfasst die Computersoftware und/oder Firmware, die in der Serviceleistung 1 involviert ist, einschließlich aller Daten und Medien, auf die im Zusammenhang mit der Serviceleistung 1 zugegriffen wird. Diese Software kann über den lokalen Servicecomputer 26 und einen oder mehrere weitere angeschlossene Servicecomputer 4 verteilt sein, d.h. auf diesen laufen. Letzteres ist beispielsweise der Fall, wenn auf dem lokalen Servicecomputer 26 ein Internet-Browser läuft, der mit einem entfernten Server verbunden ist.

Der lokale Servicecomputer 26 umfasst vorteilhafterweise ein Mittel zur Serviceausgabe 6 zum Übermitteln von Information über die Serviceleistung 1 an den Serviceuser 2. Allgemein werden hierunter die verwendeten Darstellungsmittel und Einrichtungen des lokalen Servicecomputers 26 zum Übermitteln von Information an den Serviceuser 2 verstanden. In einer bevorzugten Ausführungsform umfasst das Mittel zur Serviceausgabe 6 einen für den Serviceuser 2 einsehbaren Monitor zusammen mit einem auf der Fenstertechnik basierenden Anzeigesystem des lokalen Betriebssystems und der standardmäßigen Anzeigeausgabe eines Internet-Browsers.

Es kann eine Standard-Internet-Browser-Software wie beispielsweise Microsoft™ Internet Explorer™ oder Netscape™-Navigator als Servicesoftware 3 auf dem lokalen Servicecomputer 26 verwendet werden, die auf einem Standard PC mit Monitor läuft. Entsprechende Web-Server wie beispielsweise Apache™, Datenbankserver usw., wie sie in einer standardmäßigen, webbasierten Servicesoftware 3 verwendet werden, können auf weiteren Servicecomputern 4 bzw. dem lokalen Servicecomputer 26 ablaufen.

Der Begriff "Internet-Browser" ist ein gebräuchlicher Ausdruck, der Software bezeichnet, die in der Lage ist, Multimedia-Dokumente (sogenannte World-Wide-Web- oder WWW- oder Web-Dokumente), die auf Internet-Computern abgelegt sind und geeigneten Standards entsprechen, die durch das World-Wide-Web-Konsortium W3C geschaffen werden, darzustellen. Der Microsoft™ Internet Explorer™ und der Netscape Navigator™ sind bekannte Beispiele derartiger Internet-Browser. Die derzeit bevorzugte Sprache zur Beschreibung solcher Dokumente ist die sogenannte HTML-Familie, es kommen aber auch andere Formate und Protokolle wie XML, XHTML oder FTP in Betracht.

Der lokale Servicecomputer 26 ermöglicht die Serviceeingabe 5 zur Steuerung der Servicesoftware 3. Hierzu rechnen im erfindungsgemäßen Zusammenhang alle Mittel, die zur Umsetzung drahtlos übertragener Daten in interaktive Eingaben an den lokalen Servicecomputer 26 geeignet sind, d.h. alle Mittel und Vorrichtungen, die auf dem lokalen Servicecomputer 26 verwendet werden, um von dem Serviceuser 2 übermittelte Eingaben an die Servicesoftware 3 weiterzuleiten. In der bevorzugten Ausführungsform bildet die Mimik 12 Standardeingabemittel des mobilen Handgeräts 11 wie beispielsweise Funktionsknöpfe eines Mobiltelefons auf Standardeingabemittel des lokalen Servicecomputers 26, insbesondere Tastatureingaben und Mausbewegungen nach. Auf diese Weise ist es dem Serviceuser 2 möglich, in einer ihm vertrauten Art und Weise die Servicesoftware 3 zu bedienen.

Aus demselben Grund ist es vorteilhaft, wenn mit dem mobilen Handgerät 11 durch den Serviceuser 2 vorgenommene Eingaben in Mausbewegungen auf einem für den Serviceuser 2 einsehbaren Monitor des lokalen Servicecomputers 26 umgesetzt werden. Derartige Eingaben können mit standardmäßigen Mitteln 14 zur Ein- und Ausgabe, die bei dem mobilen Handgerät 11 gebräuchlicherweise vorhanden sind, durchgeführt werden, beispielsweise der Buchstaben- oder Zifferntastatur, Cursortasten, einer Maus oder einer Mausbewegungen simulierenden Vorrichtung wie beispielsweise Stift oder Touch-Panel. Auch andere Eingabeformen wie beispielsweise Sprachsteuerung sind möglich, ebenso kann die Serviceausgabe 6 neben der beschriebenen Ausführungsform beispielsweise als Sprach-, Ton- oder Musik-Ausgabe ausgeführt sein.

In einer bevorzugten Ausführungsform umfasst die Mimik 12 ein Trägheitsnavigationssystem zum Erfassen der Bewegung des mobilen Handgeräts durch den Serviceuser 2 und zum Erzeugen von Serviceeingaben 5 in Abhängigkeit hiervon. Ein derartiges Trägheitsnavigationssystem wird verwendet, um zu detektieren, wie ein Serviceuser 2 das mobile Handgerät 11 in der Luft bewegt; diese Bewegungen werden in Mausbewegungen umgewandelt und über die drahtlose Verbindung 10 und einen Servicezugang 17 an die Serviceeingabe 5 übermittelt. Dabei kann vorzugsweise eine bestimmte Taste auf der Tastatur des mobilen Handgeräts 11 verwendet werden, um einen linken Mausklick nachzuahmen.

Gemäß einer bevorzugten Ausführungsform weist ein Trägheitsnavigationssystem einer Mimik 12 einen Beschleunigungsmesser oder einen Kreisel auf. Es ist bekannt, gewöhnliche Computermäuse (Zeigegeräte), die in der Luft verwendet werden können, auf Basis von Vorrichtungen zu bauen, die die Beschleunigung oder Drehung der Maus messen. Derartige Geräte können als Mikrovorrichtungen gefertigt und somit in ein mobiles Handgerät 11 integriert oder an diese angesetzt werden. Miniaturisierte Beschleunigungsmesser sind beispielsweise von AMD (Analog Devices, Norwood, USA) erhältlich. Eine auf einem Kreiselsystem basierende Maus wurde von Gyropoint Inc., Saratoga, Kalifornien, vorgeschlagen, wobei ein Mikrobeschleunigungsmesser von Gyration Inc., Saratoga, Kalifornien, verwendet wurde.

Die Mimik 12 für Tastatureingaben kann die Standardeingabemittel 14, die auf dem Handgerät 11 vorhanden sind, verwenden. Wenn das mobile Handgerät 11 ein Funktelefon ist, das nur eine numerische Tastatur aufweist, können numerische Tasten verwendet werden, um sowohl numerische Daten, die unmittelbar zugeordnet sind, als auch alphanumerische Eingaben, beispielsweise wie bei Telefontasten, einzugeben. Bei tragbaren Taschencomputern sind die gerätespezifischen Eingabemittel abhängig von der Art des Geräts, beispielsweise ein Stift mit Handschrifterkennung, eine Miniaturtastatur usw. Servicezugang 17 und drahtlose Verbindung 10 werden verwendet, um die Eingaben an die Serviceeingabe des lokalen Servicecomputers 26 zu übertragen.

Zusammenfassend werden unter Mimik 12 im erfindungsgemäßen Zusammenhang die Mittel verstanden, die interaktive Eingaben am mobilen Handgerät durch den Serviceuser 2 abbilden auf nachgeahmte interaktive Eingaben an die Servicesoftware 3, soweit sich die am mobilen Handgerät verwendeten Standardeingabe/-ausgabemittel von den in der Serviceeingabe 5 erwarteten unterscheiden. Wenn die Serviceeingabe 5 auf Tastatureingaben und Mausbewegungen oder Mausaktionen beruht, muss die Mimik 12 relevante Eingaben mittels des mobilen Handgeräts 11 in diese Art von Eingaben umsetzen.

Ein besonderer, mit der Erfindung realisierbarer Vorteil besteht also darin, dass die nach dem Stand der Technik an einem lokalen Servicecomputer 26 vorzunehmenden Serviceeingaben 5, beispielsweise Maus- und Tastatureingaben, drahtlos von dem mobilen Handgerät 11 durchgeführt werden, ohne dass der Serviceuser 2 unmittelbaren Zugang zu dem lokalen Servicecomputer 26 hat. Die Standardausgabe des lokalen Servicecomputers 26 muss dabei in der bevorzugten Ausführungsform nicht zu dem mobilen Handgerät 11 übertragen bzw. umgeleitet werden, da der sich im Bereich des lokalen Servicecomputers 26 aufhaltende Serviceuser 2 die Standardausgabe des lokalen Servicecomputers 26, z.B. eine Monitordarstellung oder Audio-Ausgabe, wahrnehmen kann.

Unter Servicezugang 17 wird im erfindungsgemäßen Zusammenhang alle Software und/oder Firmware, einschließlich aller entsprechender Daten und Medien, auf dem mobilen Handgerät 11 und dem lokalen Servicecomputer 26 verstanden, die zu einem korrekten Ablauf des erfindungsgemäßen Verfahrens wie folgt beitragen. Diese Software gewährleistet die koordinierte Verwendung von Zertifikaten, Personenkennzeichen 15, Servicedaten 16, Mitteln für die Standardeingabe/-ausgabe 14, evtl. Leseeinrichtungen 13, Steckzusätzen, der Mimik 12 und der drahtlosen Kommunikation 10 auf dem mobilen Handgerät 11 sowie der drahtlosen Kommunikation 10 und der Serviceeingabe 5 auf dem lokalen Servicecomputer 26 sowie des Transaktionsdatensatzes 9, um das Zugreifen auf die Servicesoftware 3 von dem mobilen Handgerät 11 aus zu ermöglichen.

Falls eine lokale drahtlose Kommunikation für die Verbindung zwischen dem Handgerät 11 und dem lokalen Servicecomputer 26 verwendet wird, wird der Servicezugang 17 sowohl auf dem Handgerät 11 als auch dem lokalen Servicecomputer 26 implementiert sein. Falls gemäß Anspruch 9 ein öffentliches drahtloses Telefonnetz verwendet wird und der lokale Servicecomputer 26 nicht mit der entsprechenden Hardware für die drahtlose Kommunikation ausgerüstet ist, beispielsweise aus wirtschaftlichen Gründen, wird auf dem Computer, mit dem das mobile Handgerät 11 in Verbindung tritt, ein zusätzliches zwischengeschaltetes Modul für den Servicezugang 17 erforderlich 5 sein.

Das mobile Handgerät 11 ist in bevorzugten Ausführungsformen ein Mobiltelefon oder ein Palmtop-Taschencomputer. Allgemein ist es ein tragbares elektronisches Gerät, nämlich der von dem Serviceuser 2 mit sich geführte und ggf. in seinen Besitz befindliche Computer. Dieser Computer kann in ein Gerät integriert sein, beispielsweise in ein Mobiltelefon. Neben den Mitteln zur Standardeingabe/-ausgabe 14 und einem Servicezugang 17 mittels der drahtlosen Verbindung 10 kann das mobile Handgerät 11 auch die Mimik 12 und eine oder mehrere Leseeinrichtungen 13 umfassen.

Eine solche Leseeinrichtung 13 bezeichnet allgemein die Hardware und die Funktionen, die entweder zum Lesen von Daten von natürlichen oder künstlichen Datenträgern oder zum Verbinden mit externen Funktionen dienen. Das Lesen von Daten bezieht sich beispielsweise auf biometrische Daten oder externe Datenträger, beispielsweise Fingerabdrücke, Kreditkarten usw.. "Externe Funktionen" bezieht sich auf zu lesende Objekte, die Code enthalten und optional Ausführungslogik wie beispielsweise Chipkarten (Geldkarten, SmartCards).

Die Verwendung einer Leseeinrichtung 13 ist zur Durchführung der Erfindung nicht zwingend erforderlich. Allerdings ist es beispielsweise praktisch, einen Kreditkartenleser zu verwenden. In diesem Fall können die Kreditkarte und die zugehörige PIN verwendet werden, um die Software des Servicezugangs 17 auf dem Handgerät 11 automatisch zu veranlassen, einen geheimen Schlüssel zu einem Anwendungszertifikat für den Inhaber der Karte, idealerweise ein von dem Kreditkartenunternehmen herausgegebenes Zertifikat, mit dem Serviceuser 2 des Handgeräts 11 zu verknüpfen. Diese Option ist praktisch für die weite Verbreitung erfindungsgemäßer Geräte. Serviceuser 2 ohne Kreditkartenleser können dann eine Teilmenge der von Serviceanbietern allgemein angebotenen Serviceleistungen 1 in Anspruch nehmen; sicherheitskritischere Serviceleistungen 1, z.B. solche, die mit hohen Kosten verbunden sind, können dann auf Serviceuser 2 beschränkt werden, die ein Handgerät 11 mit einem Kreditkartenleser und ein von einem Kreditkartenunternehmen ausgegebenes Zertifikat besitzen.

Die drahtlose Verbindung 10 zwischen dem Handgerät 11 und dem lokalen Servicecomputer 26 kann in vorteilhaften Ausführungsformen als lokale Verbindung ausgeführt sein oder über ein öffentliches Telefonnetz erfolgen. Zu der drahtlosen Verbindung 10 gehören die Hardware- und Softwareteile sowohl des Handgeräts 11 als auch des Servicecomputers 4 bzw. 26, die verwendet werden, um Daten zwischen diesen hin und her zu übertragen. Bevorzugt ist eine lokale drahtlose Verbindung, die das Handgerät 11 mit dem lokalen Servicecomputer 26 verbindet, beispielsweise per Funk oder Infrarot. Viele gebräuchliche Handgeräte wie Mobiltelefone oder Palmtops weisen bereits heute entsprechende Einrichtungen zum lokalen Kommunizieren auf, z.B. nach dem Bluetooth™-Verfahren oder mittels Infrarotschnittstellen. Je nach der für die drahtlose Verbindung 10 verwendeten Technologie können grundlegende Identifikationen und Sicherheitsfunktionen im Sinne von Datenschutz und Datensicherheit auch in dem Modul für die drahtlose Verbindung statt in Servicesoftware 3 und Servicezugang 17 durchgeführt werden.

Nach einem weiteren vorteilhaften Merkmal kann vorgesehen sein, dass die drahtlose Verbindung 10 zwischen dem mobilen Handgerät 11 und dem Servicecomputer 4, 26 automatisch aufgebaut wird, wenn der Serviceuser 2 in die Nähe des lokalen Servicecomputers 26 gelangt. Dies ist insbesondere vorteilhaft, wenn die drahtlose Verbindung 10 lokal ist.

Im erfindungsgemäßen Zusammenhang ist die Verwendung von öffentlichen Netzen zur drahtlosen Kommunikation wie GSM, UMTS oder Paging-Netzen im allgemeinen nur sinnvoll, wenn das Handgerät 11 oder der lokale Servicecomputer (26) keine Vorrichtung zur lokalen drahtlosen Kommunikation besitzt, da Kommunikation über öffentliche Netze üblicherweise gebührenpflichtig ist. Der "Umweg" über das öffentliche Netz kann für die hinreichende Marktdurchdringung einer Servicesoftware sinnvoll sein, solange Mobiltelefone nicht flächendeckend über Möglichkeiten zur drahtlosen lokalen Kommunikation verfügen, wie dies bei sogenannten SmartPhones mit Bluetooth™-Kommunikationsfähigkeit oder anderen, gegebenfalls zukünftigen Entwicklungen der Fall ist.

In einer bevorzugten Ausführungsform erfolgt die drahtlose Verbindung 10 mittels einer Bluetooth™-Sende- und Empfangseinrichtung. In diesem Fall wird kein öffentliches Telefonnetz benötigt. Das Handgerät 10 und der lokale Servicecomputer 26 sind jeweils mit einer Sende- und Empfangseinrichtung ausgestattet. Vorteilhafterweise kann das sogenannte Bluetooth™-Host-Controller-Interface verwendet werden, um Eingaben des Serviceusers 2, von der der Mimik 12 kommend, an den lokalen Servicecomputer 26 zu übertragen.

Bluetooth™ ist eine drahtlose, kurzreichweitige, digitale Kommunikationstechnik, deren Standardisierung und Verbreitung vom Bluetooth-Konsorcium mit über 1000 Mitgliedern, meist Firmen, betrieben wird. Bluetooth™ arbeitet im 2,4 GHz Band; angewendet wird das "Frequency-Hopping"(FH)-Verfahren. Dessen spezielle Ausprägung sorgt dafür, dass Geräte ohne manuellen Eingriff Verbindung miteinander aufnehmen können, wenn sie einander räumlich nahe kommen, auch wenn diese einander vorher "unbekannt" waren (es ist also kein manueller Konfigurations-Schritt notwendig). Aufeinander aufbauende Kommunikationsprotokolle im Bluetooth-Rahmenwerk sorgen für wichtige Funktionen wie die eigentliche Signalübertragung, gesicherte Kommunikationsbeziehungen, Austausch von Geräte-Charakteristika, Internet-kompatible Kommunikation, Übertragung strukturierter Daten über das vom Infrarot-Kommunikationsstandard "IrDA" bekannte "OBEX" (object exchange) u.s.w. Bluetooth unterstützt in elementarer Form auch Schutzziele wie Vertraulichkeit (durch verschlüsselte Kommunikation) und Authentifizierung (auf Geräteebene, sichergestellt wird dabei die Identität des Gerätes, nicht von Software oder Nutzer). Der Umfang, in dem diese Ziele erreicht wurden, wurde viel diskutiert und kritisiert; letztlich ist Sicherheit für Bluetooth aufgrund der begrenzten räumlichen Ausdehnung und ursprünglicher Einsatzszenarien ("cordless desktop") kein vorrangiger Anspruch. Die in der vorliegenden Patentschrift geforderte Zurechenbarkeit erfordert zusätzliche Maßnahmen.

Aus Sicherheitsgründen ist es vorteilhaft, wenn sich der Serviceuser 2 mittels digital signierter Daten gegenüber dem Servicecomputer 4, 26 identifiziert. Die digital signierten Daten können vorteilhafterweise mittels einer Leseeinrichtung, insbesondere eines Chip- oder Kreditkartenlesers oder eines biometrischen Sensors, in das mobile Handgerät 11 eingelesen und / oder mittels der Standardeingabemittel 14 des mobilen Handgeräts 11, insbesondere in Form einer PIN oder eines Passworts oder mit einem digitalen Schreibstift, in das mobile Handgerät 11 eingegeben werden.

Die in dem erfindungsgemäßen Verfahren involvierten Anwendungszertifikate umfassen vorteilhafterweise ein digitales Anwendungszertifikat 7 über den Serviceuser 2 und/oder ein digitales Anwendungszertifikat 27 über die Servicesoftware 3 5 und damit über die Serviceleistung 1. Es ist empfehlenswert, den derzeitigen Standard für digitale Zertifikate, ISO Standard X.509 zu verwenden. Diese Zertifikate helfen, die Identität, Authentizität und Eigenschaften der Servicesoftware 3 und somit der Serviceleistung 1 sowie des Serviceusers 2 gegeneinander zu beweisen. Die Entscheidung des Serviceusers 2, eine bestimmte Serviceleistung 1 in Anspruch zu nehmen, kann davon abhängig gemacht werden, dass ein entsprechendes Anwendungszertifikat oder ein Anwendungszertifikat mit bestimmten Merkmalen vorhanden ist. Aus der Sicht des Anbieters der Serviceleistung 1 kann der Umfang der angebotenen Serviceleistung 1 von der Existenz eines digitalen Zertifikats über den Serviceuser 2 oder eines solchen Anwendungszertifikats mit bestimmten Merkmalen abhängig gemacht werden.

In einer besonderen Ausführungsform kann vorgesehen sein, dass das Anwendungszertifikat 7 des Serviceusers 2 auf einem mit dem Internet verbindbaren Computer gespeichert ist und das mobile Handgerät 11 die digital signierte Internet- Adresse des Anwendungszertifikats des Serviceusers 2 bereitstellt. Die Servicesoftware 3 kann dann mittels des Servicezugangs 17 das Anwendungszertifikat 7 des Serviceusers 2 abfragen und die Identität des Serviceusers 2 durch Entschlüsseln der Signatur mittels des von dem Zertifikat entnommenen öffentlichen Schlüssels verifizieren.

Nach einem zusätzlichen vorteilhaften Merkmal kann vorgesehen sein, dass ein digitales Systemzertifikat 33 für Systembestandteile wie Software, Hardware oder erfindungsgemäße Systemerweiterungen des mobilen Handgeräts 11 und/oder ein digitales Systemzertifikat 8 für Systembestandteile des lokalen Servicecomputers 26 verwendet wird. Auch hierfür ist X.509 ein empfehlenswerter Standard. Diese Zertifikate dienen dazu, das Vertrauen in die nicht-lokale Software, zu der eine Verbindung hergestellt wird, insbesondere den Servicezugang 17, herzustellen. Der Servicezugang 17 kann auf dem Handgerät 11 derart implementiert sein, dass er nur Verbindungen zu entsprechend richtig zertifizierter Software für den Servicezugang 17 auf dem lokalen Servicecomputer 26 akzeptiert; entsprechendes kann für die Implementierung des Servicezugangs 17 auf dem lokalen Servicecomputer 26 gelten.

Jedes der digitalen Zertifikate 7, 8, 27, 33 kann aus mehreren unabhängigen Teilzertifikaten bestehen, beispielsweise bei Anwendungszertifikaten, wenn unterschiedliche Merkmale des Serviceusers 2 oder der Serviceleistung 1 in unterschiedlichen Zertifikaten beschrieben sind, oder bei Systemzertifikaten, wenn unterschiedliche Systemkomponenten durch unterschiedliche Zertifikate ausgewiesen werden.

Die Verwendung von digitalen Anwendungszertifikaten 7, 26 und Systemzertifikaten 8, 33 ist zur Durchführung der Erfindung nicht zwingend erforderlich. Bei rechtsverbindlichen Vereinbarungen, deren elektronische Variante die vorliegende Erfindung unterstützt, ist es häufig üblich, dass die Beteiligten sich ausweisen, aber von den Umständen des Falles abhängend, ob und wie. Insbesondere zeigt sich beim elektronischen Handel, dass allzu strenge Regelungen des Verwendens von Zertifikaten hemmend wirken. Im Zusammenhang mit dem Schutzziel "Zurechenbarkeit" stellen Zertifikate sicher, dass die Urheberschaft von öffentlichen Schlüsseln, wie sie in digitalen Signaturen verwendet werden, nicht geleugnet werden kann. Insbesondere können diese Zertifikate verwendet werden, um während des Verbindungsaufbaus das Vertrauen in einen gegen Ende der Servicenutzung 24 zu verwendenden Transaktionsdatensatz 9 herzustellen.

Ein solcher Transaktionsdatensatz 9 wird nach einem zusätzlichen vorteilhaften Merkmal verwendet. Er beinhaltet Daten über die Servicenutzung 24 der Serviceleistung 1 durch den Serviceuser 2 einschließlich einer Identifikation der Serviceleistung 1 und des Serviceusers 2. Nach einem weiteren vorteilhaften Merkmal wird der Transaktionsdatensatz 9 am Ende einer Verhandlungsphase 22 beim Beginn einer Vertragsschlussphase 23 erstellt bzw. vervollständigt. Dabei kann nach einem bevorzugten Merkmal vorgesehen sein, dass eine verwendete Internet-Browser-Software für den Servicezugang 17 auf dem lokalen Servicecomputer 26 ein Plug-In zum Erzeugen eines Transaktionsdatensatzes 9 umfasst.

Der Begriff "Plug-In" bezeichnet ein Standardverfahren zum Ergänzen von Browser-Software. Das erfindungsgemäße Plug-In erzeugt einen Transaktionsdatensatz 9, der in der bevorzugten Ausführungsform wesentlich ist. Er enthält den Inhalt des ausgefüllten, auf dem Internet-Browser basierenden Formulars, das von dem Serviceuser 2 bestätigt ist. Dabei bezieht sich "bestätigt" auf die Aktion, die veranlasst, dass der Servicezugang 17 eine Verhandlungsstufe 22 verlässt und die Phase des Vertragsschlusses 23 vorbereitet.

In der bevorzugten Ausführungsform erfolgt das Bestätigen, wenn der Internet-Browser derart verwendet wird, dass ein gerade für den User dargestelltes Formular abgeschlossen wird, was üblicherweise durch einen Mausklick auf eine bestimmte Schaltfläche erfolgt. Diese Aktion wird durch das Plug-In unterbrochen und ein Transaktionsdatensatz 9 wird erzeugt, in dem die Inhalte des Formulars in einer bestimmten Beschreibung enthalten sind. Ein anderes vorteilhaftes Merkmal kann darin bestehen, dass in dem mobilen Handgerät 11 Personenkennzeichen 15 des Serviceusers 2 gespeichert sind. Personenkennzeichen in diesem Sinne sind Daten und/oder Funktionen, die den Serviceuser 2 eindeutig identifizieren, zuzüglich Daten, die den Serviceuser 2 beschreiben und die durch die Servicesoftware 3 abgefragt werden können. Solche Personenkennzeichen 15 sind beispielsweise die Anschrift, Bankverbindungsdaten usw. Aus Sicherheitsgründen kann weiterhin vorgesehen sein, dass in dem mobilen Handgerät 11 ein Teil der Personenkennzeichen 15 des Serviceusers 2 permanent gespeichert und/oder ein Teil flüchtig gespeichert ist.

Das permanente Speichern von Personenkennzeichen 15 vereinfacht die Benutzung des Systems durch den Serviceuser 2. Um die Persönlichkeitsdaten gegen Veränderung oder unerlaubte Benutzung zu schützen, kann vorgesehen sein, dass der in dem mobilen Handgerät 11 permanent gespeicherte Teil der Personenkennzeichen 15 nicht zur eindeutigen zurechenbaren Identifizierung des Serviceusers 2 ausreicht, so dass so eine Veränderung oder unerlaubte Verwendung nur einen geringen Schaden verursachen kann.

Ein flüchtig gespeicherter Teil von Personenkennzeichen 15 wird vorteilhafterweise nach Ablauf einer vorgegebenen Zeit, vorzugsweise kurz nach dem Eingeben oder Einlesen in das Handgerät 11, oder bei Eintritt eines vorgegebenen Ereignisses, insbesondere nach dem Ende der Nutzung einer Serviceleistung 1 oder beim Ausschalten oder Ablegen des mobilen Handgeräts 11 automatisch gelöscht. In diesen Fällen muss der flüchtige Teil der Personenkennzeichen 15 für die weitere Verwendung des Handgeräts 11 neu eingegeben oder eingelesen werden. Es ist empfehlenswert, hochsensitive Daten oder Funktionen flüchtig zu speichern.

Zum Eingeben oder Einlesen flüchtiger Personenkennzeichen 15 in das Handgerät 11 können Mittel der Standardeingabe/ausgabe 14 oder Leseeinrichtungen 13 verwendet werden. Im Falle der Mittel für die Standardeingabe/-ausgabe 14 gibt der Serviceuser 2 den flüchtigen Teil seiner Personenkennzeichen 15 (z.B. PIN, Passwort usw.) unter Verwendung der normalen Eingabe- und Ausgabemittel des Handgeräts 11, beispielsweise Tastatur oder Stift ein.

Bei Verwendung einer Leseeinrichtung 13 wird angenommen, dass der Serviceuser 2 ein externes Medium hat, auf dem die flüchtigen Personenkennzeichen 15 zur Verfügung stehen. Solche externe Medien können beispielsweise Plastikkarten oder Körperteile sein. Die entsprechende Leseeinrichtung 13, beispielsweise ein biometrischer Sensor oder ein Chip- oder Kreditkartenleser machen den entsprechenden, flüchtigen Teil der Personenkennzeichen 15 für das Handgerät 11 zugänglich. Das Merkmal der Flüchtigkeit bezieht sich insoweit nur auf die Speicherung in dem Handgerät 11, da die Daten (z.B. Iris, Fingerabdruck, Kreditkarte) auf dem entsprechenden externen Medium nicht flüchtig, sondern permanent sind. Dies kann zu einem Sicherheitsrisiko führen, das außerhalb der Erfindung liegt, beispielsweise wenn eine Kreditkarte verloren oder gestohlen wird. Derartige Risiken können verringert werden, wenn Mittel zur Standardeingabe/-ausgabe 14 und Leseeinrichtungen 13 in Kombination verwendet werden, beispielsweise durch Kombination einer PIN mit einer Kreditkarte.

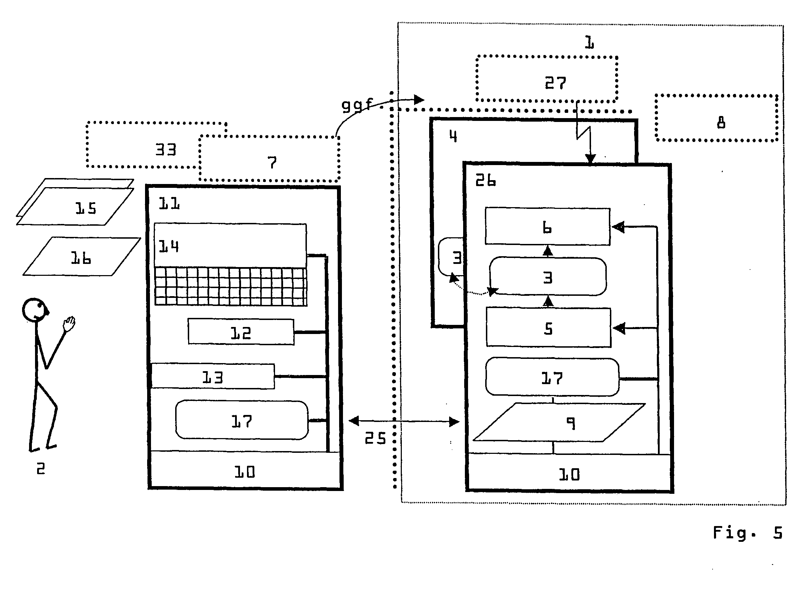

In Fig. 5 wird die Darstellung von Fig. 1 erweitert. Insbesondere sind dort die Servicedaten 16 dargestellt. Sie bezeichnen die Information, die von dem Serviceuser 2 zusätzlich zu den Personenkennzeichen 15 an die Servicesoftware 3 übertragen wird. Darin können auch Selektionsdaten enthalten sein, die Einzelheiten der akzeptierten Serviceleistung 1 betreffen. Weiters sind in Fig. 5 die erläuterten Zertifikate dargestellt.

Wie in der nicht-digitalen Welt ist es auch im erfindungsgemäßen Zusammenhang nicht sinnvoll, in der Erfindung verbindlich festzulegen, welche Daten und Schlüssel als Teil der Zertifikate 7,8,27,33, welche als Personenkennzeichen 15 und welche als Servicedaten 16 anzusehen sind. Zertifikate sind Ausweisen vergleichbar; Personenkennzeichen 15 sind mitgeführten Schriftstücken vergleichbar, welche häufig benötigte Angaben enthalten, und Servicedaten 16 sind Angaben vergleichbar, die fallweise gemacht werden und dann neu eingegeben werden müssen. Auch beim nicht-elektronischen Handel können sich diese drei Kategorien fallweise unterscheiden: ob beim nicht-elektronischen Handel beispielsweise ein Kunde zur Angabe seiner Kontendaten eine vertrauenswürdige Kontokarte vorlegt, einen Zettel mit diesen Angaben aus der Tasche holt oder die Angaben neu niederschreibt, hängt von der üblichen Praxis, den Gewohnheiten und gegebenenfalls den Umständen des Falles ab.

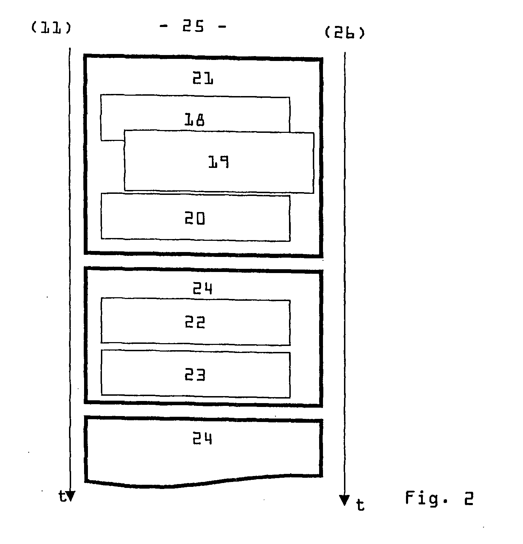

In Fig. 2 ist der zeitliche Ablauf eines Protokolls 25 zwischen einem mobilen Handgerät 11 und einem lokalen Servicecomputer 26 dargestellt. Es umfasst vorteilhafterweise die Stufen Begrüßung 21, Verhandlung 22 und Vertragsschluss 23. Nach einem zusätzlichen vorteilhaften Merkmal wird vorgeschlagen, dass die Zertifikate als Teil der Begrüßung 21 und Serviceeingaben als Teil der Verhandlung 22 übertragen werden und der Vertragsschluss 23 stattfindet, wenn eine bestimmte Schaltfläche durch einen nachgeahmten Mausklick betätigt wird. Die Begrüßung 21 umfasst in dem dargestellten Beispiel eine Entdeckung 18, einen Sicherheitshandshake 19 und eine Modalitätenabstimmung 20.

Die Entdeckung 18 umfasst die Prozeduren und Protokolle der drahtlosen Kommunikation 10 und anderer Teile des Systems, die das mobile Handgerät 11 und den Servicecomputer 4 bzw. lokalen Servicecomputer 26 und ihre relevanten Eigenschaften gegenseitig miteinander bekannt machen und die die maschinenlesbaren Details sowie ggf. die für einen Menschen verständlichen Beschreibungen der Servicesoftware 3 und der Serviceleistung 1 für das mobile Handgerät 11 bekannt machen.

Der Sicherheitshandshake 19 umfasst die Prozeduren und Protokolle, durch die das mobile Handgerät 11 und der Servicecomputer 4 bzw. lokale Servicecomputer 26 sich gegenseitig in digital signierter Form ihre Identität mitteilen, Systemzertifikate 8, 33 austauschen, Anwendungszertifikate 7, 27 austauschen oder für das Handgerät 11 zusätzlich den Speicherort des Anwendungszertifikates übertragen, Art und Umfang der zum Zwecke der Zurechenbarkeit digital zu signierenden Kommunikationselemente wie beispielsweise einen Transaktionsdatensatz 9 festlegen, sich über weitere Sicherheitsabläufe einigen, beispielsweise über eine bestimmte Verschlüsselung, und in Abhängigkeit von den anderen Anforderungen Schlüssel austauschen.

Die Verschlüsselung der übertragenen Daten stellt eine vorteilhafte Option gegen Verfälschung, Abhören oder Missbrauch der Daten dar. Die Bedeutung der Verschlüsselung ist jedoch in Anwendungsfällen, in denen die Verschwiegenheits- und Vertraulichkeitsanforderungen gering sind, nicht hoch. Dies gilt insbesondere auch in Anwendungsfällen, in denen die Übertragung über ein lokales Netz erfolgt, da dort normalerweise wegen der räumlich begrenzten Abhörmöglichkeiten bereits ein Schutz geschaffen ist.

Der Sicherheitshandshake 19 kann sich mit der Phase der Entdeckung 18 überlappen, beispielsweise wenn eine fortgeschrittene drahtlose Kommunikationstechnologie wie Bluetooth™ verwendet wird, da dort im Rahmen der Entdeckung 18 als Teil der vorinstallierten Funktionen zwar nicht die gesamte erforderliche Authentifizierung, zumindest aber eine Geräteauthentifizierung durchgeführt wird. Daher wird ein erfindungsgemäßes System, das Bluetooth™ verwendet, den mit Bluetooth™ verbundenen Teil des Sicherheitshandshakes 19 als Teil des Verbindungsaufbaus auf Geräteebene durchführen, d.h. bevor die Phase der Entdeckung 18 beendet ist.

Die Modalitätenabstimmung 20 betrifft die Protokolle und Prozeduren, die verwendet werden, um Information über folgende Punkte auszutauschen:
- die vom lokalen Servicecomputer 26 angebotenen Serviceeingabemittel wie Maus, numerische Eingaben, alphanumerische Eingaben, Sprache usw., zusätzlich zu Abfragekriterien wie "zwingend", "bevorzugt", "optional" usw.;
- die von dem Handgerät 11 für den Serviceuser 2 bereitgestellten Eingabemittel der Mimik 12, die analog zu den obengenannten durch Angaben wie <"Maus", "bevorzugt"> usw. spezifiziert sind;
- die im weiteren Verlauf konkret zu verwendenden Eingabemittel, zuzüglich Details über deren Nutzung soweit erforderlich; als zu verwendende Eingabemittel kommen nur solche in Frage, die sowohl auf dem Handgerät 11 als auch auf dem lokalen Servicecomputer 26 angeboten werden;
- verfügbare und erwartete Optionen bezüglich der bevorstehenden Phase der Servicenutzung 24;
- die im weiteren Verlauf konkret zu verwendenden Optionen.

In der bevorzugten Ausführungsform bildet die Mimik 12 Eingaben des Serviceusers 2 auf Maus- und Tastatureingaben ab. In diesem Fall werden die vom Handgerät 11 bereitgestellten Eingabemittel als <"Maus", -.> usw. bezeichnet, auch wenn bei-spielsweise ein Beschleunigungsmesser oder Kreisel verwendet wird, um Mausbewegungen nachzuahmen, weil für die Servicesoftware 3 die Umsetzung in Mausbewegungen entscheidend ist. Auch andere Details wie die Bezeichnung und Versionsnummer einer Dokumentenbeschreibungssprache wie beispielsweise <HTML 1.1> können im Rahmen der Modalitätenabstimmung 20 zwischen dem lokalen Servicecomputer 26 und dem Handgerät 11 ausgetauscht werden.

Die Verhandlung 22 bezieht sich auf die nachgeahmten Eingaben des Serviceusers 2 an die Servicesoftware 3, die von der Mimik 12 über den Servicezugang 17 und die drahtlose Verbindung 10 an die Serviceeingabe 5 mit der Absicht übertragen werden, die gesamte Information auszuwählen und zu spezifizieren, die zum Bereitstellen der entsprechenden Serviceleistung 1 erforderlich ist sowie optional weitere in diesem Kontext von dem Serviceuser 2 angeforderte oder bereitgestellte Information.

Der Vertragsschluss 23 wandelt die in der Verhandlung 22 vom Serviceuser vorgenommene, bis dahin vorläufige Anforderung einer Serviceleistung 1 um in eine rechtsverbindliche Serviceanforderung bei der Servicesoftware 3 und somit beim Serviceanbieter. Die Phase des Vertragsschlusses 23 wird begonnen, wenn die Phase der Verhandlung 22 als abgeschlossen betrachtet werden kann und der Serviceuser 2 eine bestimmte, in der Servicesoftware 3 ausgezeichnete Aktion auslöst, beispielsweise das Klicken auf eine ausgezeichnete Schaltfläche eines elektronischen Formulars. Dabei erfolgt das Klicken über die Standardeingabe/-ausgabe 14 und gegebenenfalls über die Mimik 12, wie bei der Verhandlung 22 beschrieben; die ausgezeichnete Schaltfläche kann beispielsweise mit "Klicken Sie hier, um die Bestellung abzusenden" beschriftet sein. Die Übermittlung von Formularen durch Klicken auf eine ausgezeichnete Schaltfläche ist in Internet-Browser-Software eine gängige Vorgehensweise. In der hier beschriebenen bevorzugten Ausführungsform der Erfindung wird vor die üblicherweise mit diesem Klicken verbundene Softwarefunktion der hier beschriebene Ablauf des Vertragsschlusses 23 eingefügt.

Optional wird als Teil eines empfohlenen Verfahrens ein Transaktionsdatensatz 9 durch die Servicesoftware 3 und/oder den Teil des Servicezugangs 17, der auf dem Servicecomputer 4 bzw. 26 angeordnet ist, erzeugt; der Transaktionsdatensatz 9 wird mit der digitalen Signatur der Servicesoftware 3 digital signiert und dann durch den Servicezugang 17 signiert. Die erste Signatur verwendet den privaten Schlüssel, der dem Anwendungszertifikat 27 der Serviceleistung 1 und der Servicesoftware 3 entspricht, die zweite Signatur verwendet den privaten Schlüssel, der dem Systemzertifikat 8 des lokalen Servicecomputers 26 entspricht. Der Transaktionsdatensatz 9 wird dann an das mobile Handgerät 11 übertragen. Dort werden analog zu der Prozedur auf dem lokalen Servicecomputer 26 zwei Signaturen hinzugefügt, wobei eine dem Anwendungszertifikat 7 des Serviceusers 2 entspricht und die andere dem Systemzertifikat 33 des mobilen Handgeräts 11. Auf dem Rückweg müssen üblicherweise nur die Signaturen selbst übertragen werden, da der Transaktionsdatensatz 9 selbst im lokalen Servicecomputer 26 schon vorliegt. In dem beschriebenen Ablauf sind die Signaturen jede für sich optional.

Je nach Serviceleistung 1 können zwischen dem Ende der Phase der Verhandlung 22 und dem Ende der Phase des Vertragsschlusses 23 zusätzliche Aktionen eingefügt werden, die gegebenenfalls Benutzereingaben erfordern. Derartige Aktionen können Voraussetzung für die endgültige Zustimmung des Serviceusers 2 und/oder der die Serviceleistung 1 anbietenden Partei zur im Transaktionsdatensatz 9 beschriebenen Serviceleistung sein. Insbesondere kann die Software für den Servicezugang 17 auf dem mobilen Handgerät 11 den Serviceuser 2 explizit auffordern, dem Vertragsschluss zuzustimmen, beispielsweise durch Anzeigen einer Nachricht wie "wollen Sie wirklich das Formular unterzeichnen, das auf dem Display des Servicecomputers dargestellt wird? (ja/nein)" oder durch lokale Anzeige und Bitte um Bestätigung des Transaktionsdatensatzes. Auf Seiten der die Serviceleistung 1 anbietenden Partei kann beispielsweise eine Zahlungsprozedur wie das eingangs erläuterte "Paybox"-Schema eingeschoben werden. Sind alle derartigen zusätzlichen Aktionen abgeschlossen und der Transaktionsdatensatz 9 zwischen dem lokalen Servicecomputer 26 und dem Handgerät 11 signiert und hin- und hergesandt und sind alle erforderlichen Signaturen verifiziert, dann gilt die rechtsverbindliche Vereinbarung als geschlossen. Im Kommunikationsprotokoll 25 muss auf Basis des Standes der Technik, beispielsweise unter Zuhilfenahme von Quittungsmeldungen und Zeitschranken, dafür gesorgt werden, dass Kommunikationsfehler im Zusammenhang mit der drahtlosen Verbindung 10 nicht zu falscher Interpretation des beschriebenen Ablaufes führen, d.h. dass beispielsweise aufgrund verlorengegangener Nachrichten nicht eine Seite den Vertragsschluss als abgeschlossen betrachtet und die andere als abgebrochen. In der beschriebenen besonders vorteilhaften Ausführungsform mittels Internet-Browser-Software veranlasst dann die auf einem Plug-In basierende Software des Servicezugangs 17 die Rückkehr zum üblichen Ablauf und lässt die Software des Internet-Browsers das Formular an den Webserver übertragen.

Die Servicenutzung 24 betrifft die Verbindung einer Phase der Verhandlung 22 mit einer nachfolgenden Phase des Vertragsschlusses 23. Auf eine Phase eines Sicherheitshandshakes 19 und einer Modalitätenabstimmung 20 können mehrere Phasen von Servicenutzungen 24 folgen. Die Beendigung der Kommunikation ist zu jeder Zeit möglich. Die Kommunikation kann insbesondere zu jeder Zeit abgebrochen werden, wenn eine Prozedur oder ein Datenprotokoll nicht erfolgreich abgeschlossen werden kann. Eingaben des Serviceusers 2 während der Verhandlung 22 können entfallen, wenn alle notwendigen Daten zur Beschreibung der Serviceanforderung, in der besonderen Ausführungsform beispielsweise realisiert als Ausfüllen eines Formulars, den im Handgerät gespeicherten Informationen wie z.B. Personenkennzeichen 15 entnommen werden können. Selbst der Vertragsschluss 23 kann fallweise nur einmalig für eine ganze Reihe von zurechenbar auszugestaltenden Kommunikationsvorgängen vom Benutzer beauftragt werden, so dass nicht bei jedem solchen Vorgang eine Eingabe vom Serviceuser 2 angefordert werden muss, beispielsweise wenn in kurzen Zeitabständen das mehrmalige Durchschreiten einer Sicherheitsschleuse dem Durchschreitenden zurechenbar protokolliert werden soll.

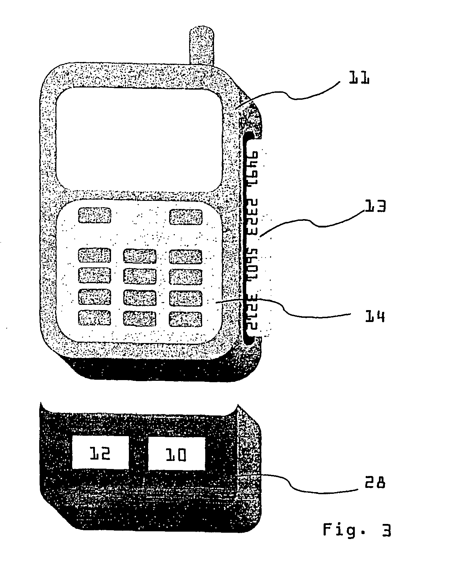

In Fig. 3 ist eine Ausführungsform eines mobilen Handgeräts 11 dargestellt. Es handelt sich dabei um ein Mobiltelefon mit einer Leseeinrichtung 13 in Form eines Kreditkartenlesers. Es umfasst ein Ansetzmodul 28, das die Funktionalität für lokale drahtlose Verbindungen 10 bereitstellt. Diese kann in der beschriebenen vorteilhaften Ausführungsform nach dem Bluetooth™-Kommunikationsstandard ausgeführt sein. Das Ansetzmodul 28 umfasst auch eine Mimik 12 in Form eines Trägheitsnavigationssystems, mit dem Bewegungen des mobilen Handgeräts 11 in Mausaktionen auf dem Internet-Browser des lokalen Servicecomputers 26 umgesetzt werden, und andere, für das erfindungsgemäße Verfahren erforderliche Funktionalitäten. Das Ansetzmodul 28 ist an das mobile Handgerät 11 ansetzbar.

Die Klassifikation der Kommunikation zwischen dem mobilen Handgerät 11 und dem lokalen Servicecomputer 26 in die drei Kategorien Sicherheitshandshake 19, Verhandlung 22 und Vertragsschluss 23 entspricht der üblichen geschäftlichen Praxis.

In besonders vorteilhafter Ausgestaltung des erfindungsgemäßen Verfahrens fasst der Transaktionsdatensatz 9 alle Kommunikationselemente im Sinne von Vertragsbestandteilen zusammen, für welche Zurechenbarkeit gewünscht wird, und wird von beiden kommunizierenden Seiten signiert. Er ist vergleichbar einer Zusammenfassung von Belegen, die ein Serviceuser 2 im nicht-elektronischen Handel bei Nutzung einer Kreditkarte üblicherweise bekommt: dort sind Details der Serviceanforderung wie gekaufte Gegenstände oder Dienstleistungen auf einem Kaufbeleg aufgelistet, Kunden- und Kreditkartendaten einschließlich Rechnungsbetrag auf einem Transaktionsbeleg. Bei erhöhter Risikobereitschaft können Kreditkartentransaktionen auch beleglos durchgeführt werden, z.B. aus Bequemlichkeit oder um Kunden nicht zu verlieren. Aus ähnlichen und weiteren Gründen kann auch im erfindungsgemäßen Ablauf die Verwendung des signierten Transaktionsdatensatzes entfallen, obwohl seine Verwendung empfehlenswert ist. Neben der Verwendung von Dokumentbeschreibungssprachen wie HTML oder XML bieten sich zu seiner Ausgestaltung auch andere Alternativen an, beispielsweise ein Faksimile des bei vorteilhafter Ausgestaltung am Bildschirm dargestellten Internet-Browser-Fensters im Sinne eines ausdruckbaren Belegs als Menge von Bildpunkten, die sich ebenfalls zur digitalen Signatur eignet.

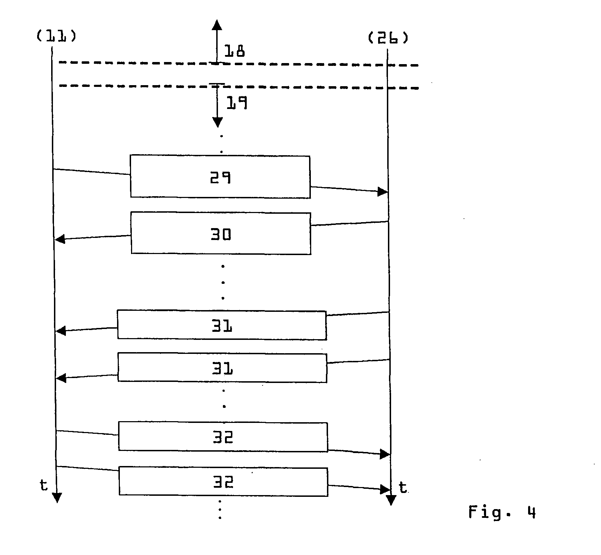

In Fig. 4 ist eine bevorzugte Ausführungsform des Sicherheitshandshake 19 veranschaulicht, der nach dem Ende der Entdeckung 18 beginnt. Bei Verwendung der Bluetooth™-Technologie ist zu beachten, dass nach Stand der Technik die Bluetooth™-Prozedur nur Geräte, aber keine User authentifiziert; die Bluetooth™-Technologie kann fallweise mitverwendet werden, um beispielsweise in geschlossenen Umgebungen (z.B. Geschäfte oder Ausstellungen) den Zugang auf Handgeräte 11 zu 5 beschränken, die potentiellen Serviceusern 2 ausgehändigt wurden. Das Bluetooth™-Protokoll und Treibermodell RFCOMM wird in dieser Ausführungsform verwendet, um die Module Mimik 12 und Servicezugang 17 des mobilen Handgeräts 11 direkt mit einem Tastatur- und Maustreiber des lokalen Servicecomputers 0 26 und mit einem Treiber, der Teil des Servicezugangs 17 auf dem lokalen Servicecomputer 26 ist, zu verbinden. Dabei können sichere Kommunikationen, digitale Signaturen und Zertifikate nach dem TLS-Standard (TLS = Transport Layer Security) verwendet werden. TLS ist eine gebräuchliche Internet-Prozedur zum sicheren Kommunizieren über unsichere Internet-Verbindungen, die für elektronischen Handel weit verbreitet ist. TLS ist stark durch das SSL-Verfahren beeinflußt (SSL = Secure Socket Layer), das in dem Dokument US 5,657,390 beschrieben ist.

Eine Variante und Ergänzung des vorgeschlagenen Internet-Standard TLS kann als Teil des Servicezugangs 17 verwendet werden, um den Sicherheitshandshake 19 zu realisieren. Diese TLS-Variante kann direkt auf Bluetooth™-RFCOMM aufgesetzt werden. Andere Ausführungsformen können beispielsweise auf PPP oder TCP basieren.

Die TLS-Nachricht "Client Hallo" 29 beinhaltet in der beschriebenen Ausführungsform z.B. zusätzlich Angaben über die Rechtswirksamkeit, die mit dem Signieren eines Transaktionsdatensatzes 9 verbunden ist, d.h. die vertraglichen Bestimmungen und Bedingungen, insbesondere eine optionale Zeitdauer, bis zu der eine unterzeichnete Vereinbarung widerrufen werden kann. Diese Option ist aus zwei Gründen wichtig. Einerseits können unterschiedliche Länder in dieser Hinsicht unterschiedliche rechtliche Randbedingungen haben; beispielsweise kann gesetzlich vorgeschrieben sein, dass ein mit elektronischem Handel abgeschlossener Vertrag innerhalb von wenigstens vier Tagen widerrufen werden kann. Andererseits kann das mobile Handgerät 11 Mittel aufweisen oder nicht, um dem Serviceuser 2 den Transaktionsdatensatz 9 im Rahmen des Vertragsabschlusses 23 lokal anzuzeigen; falls dies nicht möglich ist, kann der Serviceuser 2 den Transaktionsdatensatz 9 erst lesen und persönlich verifizieren, nachdem er nach Hause oder in sein Büro zurückgekehrt ist. In diesem Fall kann es beispielsweise von den Zertifikaten abhängen, welchen Bestimmungen und Bedingungen der Serviceuser 2 zustimmen möchte. Das entsprechende Verhalten des Servicezugangs 17 auf dem Handgerät 11 kann vorab, beispielsweise zu Hause, als Teil der Einstellung eines sogenannten "Profils" des Serviceusers 2 bestimmt werden; das Profil wiederum kann im Rahmen der Softwareinstallation auf dem Handgerät 11 initialisiert werden.

Die TLS-Nachricht "Server Hallo" 30 beinhaltet Angaben zur Bedeutung des Transaktionsdatensatzes 9 entsprechend dem Vorausstehenden; diese Angaben müssen für erfolgreichen Verbindungsaufbau den Bestimmungen und Bedingungen entsprechen, denen das Handgerät 11 gemäß der Nachricht "Client Hallo" 29 zuzustimmen bereit ist.

Die TLS-Nachricht "Server Zertifikat" 31 wird zweimal in Folge gesandt. Einmal für das Systemzertifikat 8 und einmal für das Anwendungszertifikat 27 seitens des lokalen Servicecomputers 26. Die Verwendung von Zertifikaten ist wie beschrieben im erfindungsgemäßen Zusammenhang jedes für sich optional. Systemzertifikate können dabei zur Vereinfachung von der dem jeweiligen Anwendungszertifikat entsprechenden Instanz zertifiziert sein oder umgekehrt, wobei das zertifizierende als übergeordnetes Zertifikat betrachtet wird.

Die TLS-Nachricht "Client Zertifikat" 32 wird ebenfalls zweifach in Folge gesendet und authentifiziert die Seite des mobilen Handgeräts 11 anhand des Systemzertifikates 33 und des Anwendungszertifikates 7. Für alle digitalen Signaturen wird in der bevorzugten Ausführungsform SHA verwendet, ein Verfahren, das unter anderem im Rahmen von TLS vorgeschlagen wird und das als "Secure Hash Standard" SHS des amerikanischen National Institute of Standards and Technology NIST detailliert beschrieben ist. Für alternative Ausführungsformen kommt beispielsweise das bekannte MD5-Verfahren in Frage, das aber gemeinhin als SHA unterlegen bewertet wird.

Die Systemzertifikate werden zur Authentifizierung der Implementierungen des Servicezugangs 17 verwendet und enthalten insbesondere die öffentlichen Schlüssel zur Verifikation der beiden systembezogenen Signaturen der Transaktionsdatensätze 9. Weitere Verschlüsselungsverfahren und Schlüssel werden auf Basis der Anwendungszertifikate bestimmt.

### Bezugszeichenliste

- 1: Serviceleistung
- 2: Serviceuser
- 3: Servicesoftware
- 4: Servicecomputer
- 5: Serviceeingabe
- 6: Serviceausgabe
- 7: Anwendungszertifikat zu 2
- 8: Systemzertifikat zu 26
- 9: Transaktionsdatensatz
- 10: Drahtlose Verbindung
- 11: Mobiles Handgerät
- 12: Mimik
- 13: Leseeinrichtung
- 14: Standardeingabe/-ausgabe
- 15: Personenkennzeichen
- 16: Servicedaten
- 17: Servicezugang
- 18: Entdeckung
- 19: Sicherheitshandshake
- 20: Modalitätenabstimmung
- 21: Begrüßung
- 22: Verhandlung
- 23: Vertragsschluß
- 24: Servicenutzung
- 25: Protokoll
- 26: Lokaler Service Computer
- 27: Anwendungszertifikat zu 1 und 3
- 28: Ansetzmodul
- 29: Client Hallo
- 30: Server Hallo
- 31: Server-Zertifikat
- 32: Client-Zertifikat
- 33: Systemzertifikat zu 11

## Patentansprüche

1. Verfahren zum Zugreifen auf computerbasierte Serviceleistungen (1), mit folgenden Schritten:
Erfassen eines sich vorübergehend im Bereich eines Servicecomputers (4; 26) befindlichen tragbaren elektronischem Gerät (11) eines Serviceusers (2) über eine drahtlose Verbindung (10);
Verifizieren der Identität des Serviceusers (2) des tragbaren elektronischen Geräts (11) über die drahtlose Verbindung (10);
Übermitteln von Information über die Serviceleistung (1) an den Serviceuser (2);
Empfangen einer Serviceeingabe (5) durch den Serviceuser (2) über die drahtlose Verbindung (10); und
Durchführen zumindest einer Servicenutzung (24).

2. Verfahren nach Anspruch 1, wobei das Empfangen der Serviceeingabe (5) das Umsetzen für den Servicecomputer (4; 26) von Eingaben des Serviceusers (2) in das tragbare elektronische Gerät (11).

3. Verfahren nach einem der vorangehenden Ansprüche, wobei die Serviceeingabe (5) durch den Serviceuser (2) mittels eines Trägheitsnavigationssystem des tragbaren elektronischem Geräts (11) erfolgt, das die Bewegung des tragbaren elektronischem Geräts (11) erfaßt.

4. Verfahren nach einem der vorangehenden Ansprüche, wobei ein Sicherheitshandshake (19) zwischen dem tragbaren elektronischen Gerät (11) und dem Servicecomputer (4; 26) durchgeführt wird.

5. Verfahren nach einem der vorangehenden Ansprüche, wobei das tragbare elektronische Gerät (11) einen Palmtop-Taschencomputer, ein Mobiltelefon und/oder einen Personal Digital Assistant aufweist.

6. Verfahren nach einem der vorangehenden Ansprüche, wobei die drahtlose Verbindung (10) per Funk, Infrarot, über einen Ansetzmodul (28), über ein öffentliches drahtloses Telefonnetz und/oder nach dem Bluetooth-Verfahren hergestellt wird.

7. Verfahren nach einem der vorangehenden Ansprüche, wobei die Serviceeingabe (5) eine Dateneingabe über eine Leseeinrichtung (13) aufweist, welche bevorzugt zum Lesen von biometrischen Daten, magnetische Karten, Chipkarten und/oder Datenträgern geeignet ist.

8. Verfahren nach einem der vorangehenden Ansprüche, wobei das Durchführen einer Servicenutzung (24) das Erfassen eines digitalen Zertifikats über den Serviceuser (2) und/oder eines Anwendungszertifikates (7; 8; 27) über den Serviceuser (2) und/oder über die Serviceleistung (1).

9. Verfahren nach einem der vorangehenden Ansprüche, wobei das Durchführen einer Servicenutzung (24) das Erfassen von Personenkennzeichen (15) aufweist.

10. Verfahren nach einem der vorangehenden Ansprüche, wobei Daten zwischen dem tragbaren elektronischem Gerät (11) und dem Servicecomputer (4; 26) verschlüsselt übertragen werden.

11. Computerprogrammprodukt zum Zugreifen auf computerbasierte Serviceleistungen (1), das direkt oder indirekt in den internen Speicher eines Computers geladen werden kann und Kodierungsabschnitte umfasst, die ein Verfahren zum Zugreifen auf computerbasierte Serviceleistungen (1) gemäß einem der vorangehenden Ansprüche ausführen können.

12. Computer-lesbares Speichermedium mit einem darin gespeicherten Computerprogramm zum Zugreifen auf computerbasierte Serviceleistungen (1), das direkt oder indirekt in den internen Speicher eines Computers geladen werden kann und Kodierungsabschnitte umfasst, die ein Verfahren zum Zugreifen auf computerbasierte Serviceleistungen (1) gemäß einem der vorangehenden Ansprüche 1 bis 10 ausführen können.

13. System zum Zugreifen auf computerbasierte Serviceleistungen (1), welches aufweist:
einen Servicecomputer (4; 26) zum Durchführen zumindest einer Servicenutzung (24), zum Übermitteln von Information über die Serviceleistung (1) an einen Serviceuser (2) und zum Empfangen einer Serviceeingabe (5) durch den Serviceuser (2) über die drahtlose Verbindung (10), und
einen Detektor zum Erfassen eines sich vorübergehend im Bereich des Servicecomputers (4; 26) befindlichen tragbaren elektronischem Gerät (11) eines Serviceusers (2) über eine drahtlose Verbindung (10),
wobei die Identität des Serviceusers (2) des tragbaren elektronischen Geräts (11) über die drahtlose Verbindung (10) verifiziert wird.

14. System nach Anspruch 13, wobei eine Einrichtung (12) vorgesehen ist, die Eingaben des Serviceusers (2) in das tragbare elektronische Gerät (11) für den Servicecomputer (4; 26) umsetzt.

15. System nach Anspruch 13 oder 14, wobei die Serviceeingabe (5) durch den Serviceuser (2) mittels eines Trägheitsnavigationssystem des tragbaren elektronischem Geräts (11) erfolgt, das die Bewegung des tragbaren elektronischem Geräts (11) erfaßt.

16. System nach einem der vorangehenden Ansprüche 13 bis 15, wobei ein Sicherheitshandshake (19) zwischen dem tragbaren elektronischen Gerät (11) und dem Servicecomputer (4; 26) durchgeführt wird.

17. System nach einem der vorangehenden Ansprüche 13 bis 16, wobei das tragbare elektronische Gerät (11) einen Palmtop-Taschencomputer, ein Mobiltelefon und/oder einen Personal Digital Assistant aufweist.

18. System nach einem der vorangehenden Ansprüche 13 bis 17, wobei die drahtlose Verbindung (10) per Funk, Infrarot, über einen Ansetzmodul (28), über ein öffentliches drahtloses Telefonnetz und/oder nach dem Bluetooth-Verfahren hergestellt wird.

19. System nach einem der vorangehenden Ansprüche 13 bis 18, wobei eine Leseeinrichtung (13) für eine Dateneingabe vorgesehen ist, welche bevorzugt zum Lesen von biometrischen Daten, magnetische Karten, Chipkarten und/oder Datenträgern geeignet ist.

20. System nach einem der vorangehenden Ansprüche 13 bis 19, wobei der Servicecomputer (4; 26) ein digitales Zertifikat über den Serviceuser (2) und/oder ein Anwendungszertifikat (7; 8; 27) über den Serviceuser (2) und/oder über die Serviceleistung (1) erfaßt.

21. System nach einem der vorangehenden Ansprüche 13 bis 20, wobei der Servicecomputer (4; 26) Personenkennzeichen (15) erfaßt.

22. System nach einem der vorangehenden Ansprüche 13 bis 21, wobei Daten zwischen dem tragbaren elektronischem Gerät (11) und dem Servicecomputer (4; 26) verschlüsselt übertragen werden.
